# EUROPÄISCHE PATENTANMELDUNG

(11) **EP 2 000 748 A2**
(43) Veröffentlichungstag der Anmeldung: **10.12.2008**
(21) Anmeldenummer: 08157819.7
(22) Anmeldetag: 06.06.2008
(51) Int. Cl.: F24J 2/04

(54) **Kollektorelement zur Wärmegewinnung aus der Sonnenstrahlung und Schutzabdeckung dafür**

(30) Priorität: 06.06.2007 EP 07109728
(71) Anmelder: Ustun,, Herr Orhan, 8180 Bülach (CH)
(72) Erfinder: Ustun,, Herr Orhan, 8180 Bülach (CH)
(74) Vertreter: Liebetanz, Michael

(57) **Zusammenfassung**

Ein Kollektorelement umfasst ein Absorberelement (100), insbesondere eine Solarkollektorröhre, insbesondere Vakuumröhre, welches ein Absorberrohr (102) aus einem gut wärmeleitenden Material und eine Absorberschicht (101) umfasst. Die Absorberschicht (101) umgibt das Absorberrohr (102) in wesentlichen Teilen, vorteilhafterweise vollständig. Um das Absorberrohr (100) ist ein dies umgebendes und abschliessendes Gehäuseelement (2020) vorgesehen, so dass zwischen Absorberrohr (100) und Gehäuseelement (2020) ein Vakuum, beispielsweise mit einem Druck von weniger als 10 Pascal, ausbildbar ist, wobei der Raum (103) innerhalb der Innenwand des Absorberrohres (102) mit einem Wärmeträgermedium (301) durchströmbar ist. Insbesondere kann der Raum des Wärmeträgermedium (301) auch mit einem Innenrohr versehen sein, so dass dort Latentspeichermaterial vorgesehen ist und das Wärmeträgermedium longitudinal in einem verbleibenden Ringspalt fliesst.

## Beschreibung

### Technisches Gebiet der Erfindung

Die vorliegende Erfindung betrifft ein Kollektorelement zur Wärmegewinnung aus der Sonnenstrahlung gemäss den Merkmalen des Oberbegriffs des Anspruchs 1. Ferner betrifft sie eine Schutzabdeckung für ein Kollektorelement zur Wärmegewinnung aus Sonnenstrahlung gemäss den Merkmalen des Anspruchs 7.

### Stand der Technik

Kollektorelemente zur Wärmegewinnung aus der Sonnenstrahlung sind aus dem Stand der Technik bekannt. Beispielsweise werden solche Kollektorelemente als CPC-Kollektoren (Compound Parabolic Concentrator Kollektor) bezeichnet.

CPC-Kollektoren umfassen typischerweise mehrere Vakuumröhren zur Absorption der durch das Sonnenlicht bereitgestellten Wärme. Die Vakuumröhren sind typischerweise parallel und beabstandet zueinander in einem Halter angeordnet. Der Halter umgibt die Vakuumröhren üblicherweise am oberen und am unteren Ende. Das heisst, der grösste Teil der Vakuumröhre steht nicht mit dem Halter in Berührung. Die Vakuumröhren werden dabei von einer zur Sonne gerichteten oberen Seite direkt mit Sonnenlicht bestrahlt. Durch das Anordnen eines Reflektors zwischen Halter und Vakuumröhren können die Vakuumröhren auch von der zur Sonne abgewandten hinteren Seite bestrahlt werden. Hierbei kann das Sonnenlicht durch die Lücke zwischen den einzelnen Vakuumröhren auf den Reflektor gelangen und wird von diesem dann auf die untere Seite der Vakuumröhre reflektiert. Der Wirkungsgrad eines Sonnenkollektors kann durch das Anordnen eines solchen Reflektors erhöht werden.

Im Querschnitt betrachtet weisen Reflektoren des Standes der Technik die Struktur von mehreren aneinander angrenzenden Parabeln, Halbkreisen oder anderen Kurvensegmenten auf. Dabei entsteht eine wellenartige Struktur. Die Vakuumröhren sind dabei im wesentlichen symmetrisch zu den Wellenbäuchen der wellenartigen Struktur angeordnet.

Die GB 2,058,332 zeigt einen Solarkollektor, der mit Hilfe von Linsen und einer isolierenden reflektierenden Rückschicht die allseitige Bestrahlung verbessern möchte.

Die Wärmeübertragung und Funktionssicherheit ist jedoch in vielerlei Hinsicht zu verbessern.

Kollektorelemente zur Wärmegewinnung aus Sonnenstrahlung stehen funktionsgemäss zumeist im Freien, sind mit einer Oberfläche in einem vom Breitengrad der Aufstellung abhängenden Neigung zumeist Richtung Süden ausgerichtet und sind somit der Witterung ausgesetzt. Aus dem Stand der Technik sind verschiedene Massnahmen zum Schutz von solchen Kollektorelementen bekannt.

Die US 4,324,947 beschreibt ein Solarenergiesammelsystem und umfasst einen klappbaren Deckel, mit dem die Kollektorelemente abdeckbar sind, und bildet den Oberbegriff des Anspruchs 1. Die Steuereinheit ist mit einem Wind- und Hagelsensor versehen, so dass der Deckel bei ungünstigen Wetterverhältnissen geschlossen werden kann.

Mit einem solchen Schutzsystem ist es möglich, den für Hagelschlag anfälligen Reflektor mechanisch zu schützen. Starker Hagelschlag deformiert den Reflektor und zerstört die Eloxalschicht auf dem Reflektor.

Bei der US 4,508,426 werden einzelne Solarkollektoren eines Arrays zum Schutz vor Wind- und Sturmschäden verriegelt.

Dem Fachmann ist zudem bekannt, dass sich Schmutz, wie Laub, Äste, etc. zwischen der Vakuumröhre und dem Reflektor festsetzen kann. Durch den Schmutz, welcher sich nur sehr mühsam entfernen lässt, wird der Wirkungsgrad eines Kollektorelementes negativ beeinflusst. Ferner wird durch den Schmutz und die sich darin ansammelnde Feuchtigkeit die Moosbildung auf dem Reflektor begünstigt.

Aus dem Stand der Technik ist mit der DE 103 17 479 eine Abreinigungsanlage für ebene Sonnenkollektoren bekannt, die eine motorisch getriebene drehbare Bürstenwalze umfasst, die über seitliche Führungsschienen geführt über die glatte zu reinigende Fläche verfahren wird. Einen Schutz der Sonnenkollektoren vor ungünstigen Witterungsverhältnissen bietet diese Anlage nicht.

Asche und Staub können sich ebenfalls leicht auf dem Reflektor festsetzen. Eine Reinigung des Reflektors könnte den Wirkungsgrad wieder auf ein ursprüngliches Niveau bringen. Allerdings ist die Reinigung sehr aufwendig, denn üblicherweise müssen, insbesondere bei nicht ebenen Sonnenkollektoren, die Vakuumröhren vom Halter demontiert werden, so dass der Benutzer Zugang zum Reflektor hat. Ansonsten ist die Reinigung nur zwischen den einzelnen Vakuumröhren möglich. Jedoch ist eine gute und zufrieden stellende Reinigung fast nicht möglich, weshalb immer mit Einbussen des Wirkungsgrades gerechnet werden muss.

Die Reflektoren sind typischerweise aus Aluminiumblech hergestellt. Durch die Oxidation der Oberfläche des Aluminiumblechs wird das Reflexionsvermögen erheblich reduziert. Auch dies wirkt sich negativ auf den Wirkungsgrad aus.

In Richtung der Vakuumröhren betrachtet, weisen die Reflektoren des Standes der Technik typischerweise eine zykloidennahe order kurvenartige Form auf. Pro Bogen kann eine Vakuumröhre angeordnet werden, das heisst, dass aufgrund der zykloidenartigen Ausgestaltung des Reflektors lassen sich zudem nur eine sehr begrenzte Anzahl von Vakuumröhren pro Längeneinheit, also in der Kollektorbreite, anordnen. Hinzu kommt noch, dass Reflektoren des Standes der Technik typischerweise Flächensegmente aufweisen, welche das einfallende Licht in nicht optimalen Winkeln reflektieren, so dass das reflektierte Licht nicht vollständig nutzbar ist. Dies resultiert ebenfalls in einem Verlust an Wirkungsgrad.

EP 1 707 897 zeigt ein Kollektorelement, bei dem eine Röhre mit einer Platte verbunden ist. Die Röhren sind vollständig mit einem Aerogel umgeben. Das Aerogel dient als Isolationsmaterial. Der Wirkungsgrad eines Kollektorelementes nach EP 1 707 897 ist eher gering. Zudem lassen sich die inneren Vakuumröhren nur mit grossem Aufwand auswechseln.

Aus der DE 20 2006 003 697 U1 ist schliesslich eine Einheit mit einer verfahrbaren Schaufel zum Reinigen einer ebenen Solarzellenoberfläche bekannt. Auch hier gibt es keinen Schutz vor ungünstigen Witterungsverhältnissen.

Eine Schneeschutzvorrichtung für Solarkollektoren ist aus der RU 1,614,606 bekannt, bei der ein durchsichtiger Film über zwei Rollen an den gegenüberliegenden Enden eines schräg angeordneten Solarkollektors vollkommen umlaufend um den Kollektor gespannt ist. Durch Verfahren des Films über eine Länge des Solarkollektors in die Abwärtsrichtung der Anordnung des Solarkollektors kann eine auf dem Solarkollektor liegende und diesen somit abdunkelnde Schneemenge einfach weggefahren werden.

### Darstellung der Erfindung

Ausgehend von diesem Stand der Technik liegt der Erfindung die Aufgabe zugrunde, ein Kollektorelement anzugeben, welches die Nachteile des Standes der Technik überwindet. Es soll bei verschiedensten Witterungsbedingungen einen möglichst hohen Wirkungsgrad aufweisen.

Ferner hat die Erfindung die Aufgabe, eine Schutzabdeckung für Kollektorelemente zur Wärmegewinnung aus Sonnenstrahlung anzugeben, mit der ein technisch weniger aufwendiger Schutz als bei den Vorrichtungen aus dem Stand der Technik erreicht wird und weitere Nachteile des Standes der Technik überwindet. Insbesondere soll das erfindungsgemässe Kollektorelement robust gegenüber Umwelteinflüssen sein und einen möglichst hohen Wirkungsgrad aufweisen.

Die erstgenannte Aufgabe löst ein Kollektorelement mit den Merkmalen des Patentanspruchs 1. Ein Kollektorelement umfasst ein Absorberelement, insbesondere eine Solarkollektorröhre, insbesondere Vakuumröhre, welches ein Absorberrohr aus einem gut wärmeleitenden Material und eine Absorberschicht umfasst. Die Absorberschicht umgibt das Absorberrohr in wesentlichen Teilen, vorteilhafterweise vollständig. Um das Absorberrohr ist ein dies umgebendes und abschliessendes Gehäuseelement vorgesehen, so dass zwischen Absorberrohr und Gehäuseelement ein Vakuum, beispielsweise mit einem Druck von weniger als 10 Pascal, ausbildbar ist, wobei der Raum innerhalb der Innenwand des Absorberrohres mit einem Wärmeträgermedium durchströmbar ist. Bei einer bevorzugten Ausgestaltung kann der zumeist zylindrische Raum des Wärmeträgermediums auch mit einem Innenrohr versehen sein, so dass dort Latentspeichermaterial vorgesehen wird und das Wärmeträgermedium longitudinal in dem verbleibenden Ringspalt fliesst.

Auch kann ein Kollektorelement mindestens zwei Absorberelemente, und einen Halter zur Aufnahme eines Absorberelementes mit einer Oberseite und einer Unterseite umfassen. Die Absorberelemente sind jeweils seitlich beabstandet zueinander im Halter angeordnet. Der Halter weist eine der Anzahl Absorberelemente gleiche Anzahl Rillen auf, welche in die Oberseite eingelassen sind und in welche die Absorberelemente einlegbar sind. Die Länge der Rillen entspricht im wesentlichen der wirksamen Länge der Absorberelemente.

Weiterhin ist die Erfindung durch eine Schutzabdeckung mit den Merkmalen des Patentanspruchs 7 gekennzeichnet.

Demgemäss umfasst eine Schutzabdeckung gemäss Anspruch 1 einen Antrieb, wobei der Antrieb mechanisch mit der Schutzabdeckung verbunden ist, so dass das oder die Kollektorelemente durch die Schutzabdeckung abdeckbar sind, welche eine flexible Schutzblache oder Schutzplane ist, die im wesentlichen der Grösse der abzudeckenden Kollektorelemente entspricht. Dabei sind Führungen vorgesehen, mit denen die Schutzplane über die Länge der Kollektorelemente oberhalb der Kollektorelemente aufziehbar ist, und es sind Führungen vorgesehen, mit denen die Schutzplane über die Länge der Kollektorelemente unterhalb der Kollektorelemente abdeckbar anordbar sind.

Ein solches Kollektorelement ist insbesondere gegenüber Witterungseinflüssen besonders robust. Desweiteren kann ein Kollektorelement, welches mit einer erfindungsgemässen Abdeckung versehen ist, in einfacher Art und Weise gereinigt werden. Durch die einfache Reinigung, kann der Wirkungsgrad unter vielen Betriebsbedingungen gehalten werden.

Weitere vorteilhafte Ausführungsformen sind in den Unteransprüchen gekennzeichnet.

### Kurze Beschreibung der Zeichnung

Die Erfindung wird im folgenden anhand der Zeichnungen näher beschrieben. Es zeigen:
- Fig. 1: eine perspektivische Ansicht eines erfindungsgemässen Kollektorelementes gemäss einem ersten Ausführungsbeispiel der vorliegenden Erfindung; welches zudem mit der Schutzabdeckung gemäss der vorliegenden Erfindung abgedeckt, gereinigt und geschützt werden kann;
- Fig. 2: eine perspektivische Ansicht eines erfindungsgemässen Kollektorelementes gemäss einem zweiten Ausführungsbeispiel;
- Fig. 3: eine Schnittansicht gemäss Fig. 1;
- Fig. 4: eine Draufsicht einer Kollektorvorrichtung gemäss einem weiteren Ausführungsbeispiel der vorliegenden Erfindung;
- Fig. 5: eine Detailansicht der Kollektorvorrichtung nach Fig. 4;
- Fig. 6: eine Ansicht der Kollektorvorrichtung nach Fig. 4 von vorne;
- Fig. 7: eine Detailansicht von Fig. 6;
- Fig. 8: eine Schnittansicht von Teilen der Fig. 4;
- Fig. 9: eine Draufsicht auf eine Anordnung von mehreren Kollektorelementen mit einer Schutzabdeckungsvorrichtung gemäss einem Ausführungsbeispiel der Erfindung für eine Kollektorvorrichtung;
- Fig. 10: eine Schnittansicht gemäss Linie C-C' in Fig. 9 einer Schutzabdeckungsvorrichtung gemäss der Erfindung; und
- Fig. 11: eine Schnittansicht gemäss Linie D-D' in Fig. 9 einer modifizierten Schutzabdeckungsvorrichtung gemäss der Erfindung.

### Beschreibung eines Ausführungsbeispiels

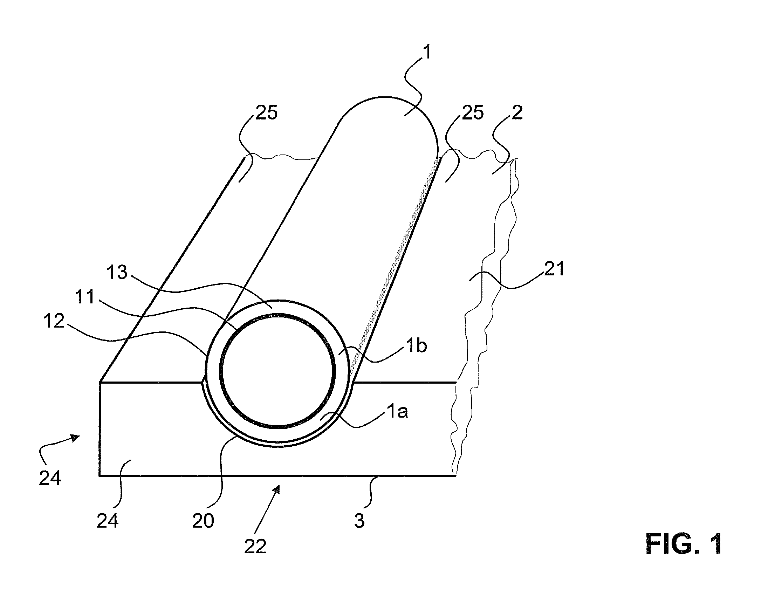

Fig. 1 zeigt eine schematische Ansicht eines erfindungsgemässen Kollektorelementes. Das Kollektorelement gemäss Fig. 1 umfasst mindestens ein, vorteilhafterweise mehrere parallel angeordnete Absorberelemente, insbesondere Solarkollektorröhren 1 und einen Halter 2, der die Solarkollektorröhren 1 aufnimmt. Die Solarkollektorröhren 1 sind vorzugsweise Vakuumröhren 1, andere Röhren sind aber ebenfalls denkbar. Der Ausdruck Vakuumröhren schliesst demnach alle Solarkollektorröhren mit Absorberschichten bzw. Absorberelemente ein.

Die Vakuumröhre 1 umfasst ein Innenrohr 11 und ein Aussenrohr 12. Zwischen dem Innenrohr 11 und dem Aussenrohr 12 entsteht ein Zwischenraum 13, welcher evakuiert ist. Vorzugsweise ist der Innendruck des Vakuums kleiner als 10 Pascal, insbesondere kleiner als 0.1 Pascal. Eine Absorberschicht 10 zur Absorption der Wärme des Sonnenlichtes wird in diesem Zwischenraum 13, also im Vakuum, angeordnet. Der Aussendurchmesser der Vakuumröhren 1 wird als Durchmesser D bezeichnet. Das Innenrohr 11 besteht aus einem gut wärmeleitenden Material. Insbesondere kann es ein Metallrohr sein. Das Aussenrohr 12 ist in seiner der Einfallsrichtung der Sonnenstrahlung zugerichteten Seite, also im wesentlichen im Bereich 1b, durchsichtig. Auf der gegenüberliegenden Seite kann das Aussenrohr undurchsichtig sein.

Die Vakuumröhren 1 des erfindungsgemässen Kollektorelementes werden durch den Halter 2 derart aufgenommen, dass die Vakuumröhren nebeneinander zu liegen kommen. Zudem sind die Vakuumröhren 1 mit einem Abstand A seitlich beabstandet zueinander angeordnet. Vorzugsweise liegen die Vakuumröhren parallel zueinander. Ferner werden die Vakuumröhren vorzugsweise über ihre gesamte Länge durch den Halter 2 aufgenommen.

Der Halter 2 ist im wesentlichen als Quader ausgestaltet und umfasst eine Oberseite 21, eine Unterseite 22 und mehrere, hier vier, Seitenwände 24. Die Seitenwände 24 verbinden die Oberseite 21 mit der Unterseite 22. Der Halter 2 ist aus einem transparenten, durchsichtigen oder durchscheinenden Material. Das heisst, dass Sonnenlicht, welches in den Halter 2 einfällt, innerhalb des Halters 2 aufgrund seiner Transparenz geleitet wird. Das durchscheinende Material des Halters 2 hat vorzugsweise einen Brechungsindex n zwischen 1.05 und 1.5.

Alternativ kann die Unterseite 22 auch eine andere Form als eine ebene Form einnehmen. Beispielsweise ist es denkbar, dass die Unterseite 22 konkav, konvex, oder parabelförmig, ausgestaltet ist. Auch die Oberseite 21 kann, unabhängig von der Ausgestaltung der Unterseite 22, über die gesamte Breite oder jeweils nur eine Eintrittsfläche 25, ebenfalls konkav oder konvex ausgestaltet sein.

Vorzugsweise ist der Halter 2 aus Plexiglas oder Glas. Diese Materialien erwiesen sich gegenüber witterungsbedingten Einflüssen als besonders robust. Vorzugsweise werden Materialien eingesetzt, welche Sonnenlicht mit einem Lichtdurchlässigkeitswert (beispielsweise nach ISO 13468-1 oder DIN 5036-3) von über 90%, insbesondere 92% oder 93%, leiten und vorzugsweise temperaturbeständig sind. Alternativ kann auch die Technologie bzw. das Material eines Fluoreszenzkollektors eingesetzt werden. Beispielsweise können im Halter Moleküle eingebettet sein, die bei Einwirkung von Sonnenlicht fluoreszieren, wobei durch Totalreflexion ein grosser Teil der einfallenden Lichtstrahlen bis zu den unteren Absorberschichtflächen geleitet wird, wo die Lichtstrahlen konzentriert eintreffen. Dabei wird der Wirkungsgrad insbesondere bei strahlungsärmeren Umgebungen verbessert.

Auf der Oberseite 21 sind mehrere Rillen oder Nuten 20 angeordnet. Die Rillen 20 erstrecken sich dabei von der Oberseite 21 in den Halter 2 hinein. Vorzugsweise weist der Halter 2 eine der Anzahl Vakuumröhren 1 gleiche Anzahl Rillen 20 auf. Jeder Rille 20 ist somit eine Vakuumröhre 1 zugeordnet. Vorzugsweise haben die Rillen 20 in der Rillenachse einen zum Querschnitt der Vakuumröhre 1 komplementären Querschnitt, so dass die Vakuumröhren 1 in die Rillen 20 einlegbar oder einbettbar sind. Das heisst im vorliegenden Ausführungsbeispiel, dass die Rillen im Querschnitt die Form von Kreissegmenten haben. Kreissegmente, welche sich über einen Winkel von 180°, also halbkreisförmig, oder kleiner als 180° erstrecken, sind besonders vorteilhaft. Dadurch wird das Einlegen bzw. ein späteres Auswechseln der Vakuumröhren 1 vereinfacht. Insbesondere der Vorgang des Auswechselns ist für den Benutzer sehr vorteilhaft, denn es lassen sich defekte Vakuumröhren in einer einfachen Art und Weise auswechseln.

Vorzugsweise weist die Rille 20 eine Länge auf, welche der wirksamen Länge der Vakuumröhre entspricht. Als wirksame Länge wird die Länge verstanden, über welche sich die Absorptionsschicht in der Solarkollektorröhre erstreckt.

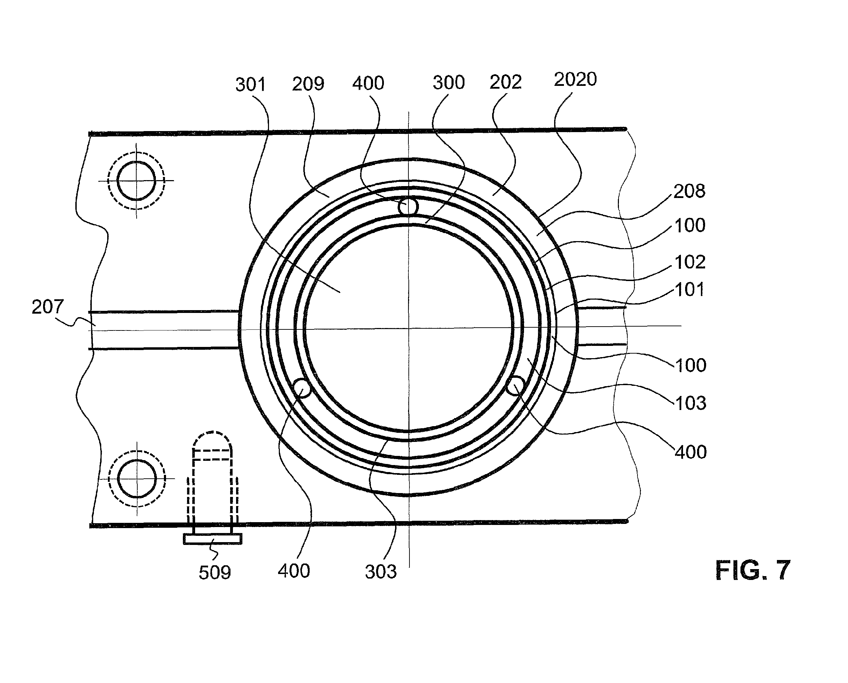

Durch das Einbetten der Vakuumröhre 1 in den Halter 2 kann diese über die ganze Länge in der Rille 20 aufliegen. Dies bietet einen guten Schutz gegen Witterungseinflüsse, wie beispielsweise Hagelschlag. Auch kann die Plane 505 gemäss Fig. 7 über eine solche Struktur gezogen werden.

Die Rillen 20 können beispielsweise in den Halter 2 mit einer hohen Genauigkeit mit einem Fräsverfahren hergestellt werden.

Nach dem Fräsvorgang kann die Oberfläche der Rille 20 mittels Schleifverfahren, Polierverfahren oder Läppverfahren bearbeitet werden, so dass die Oberfläche der Rille 20 eine feinere Oberflächenstruktur aufweist. Dieses Herstellverfahren hat den Vorteil, dass die Vakuumröhren 1 im Kollektorelement mit einem hohen Grad an Genauigkeit parallel zueinander eingelegt werden können. Alternativ kann auch ein Kunststoffspritzgussverfahren eingesetzt werden. Auch dieses Verfahren bietet einen hohen Grad an Genauigkeit.

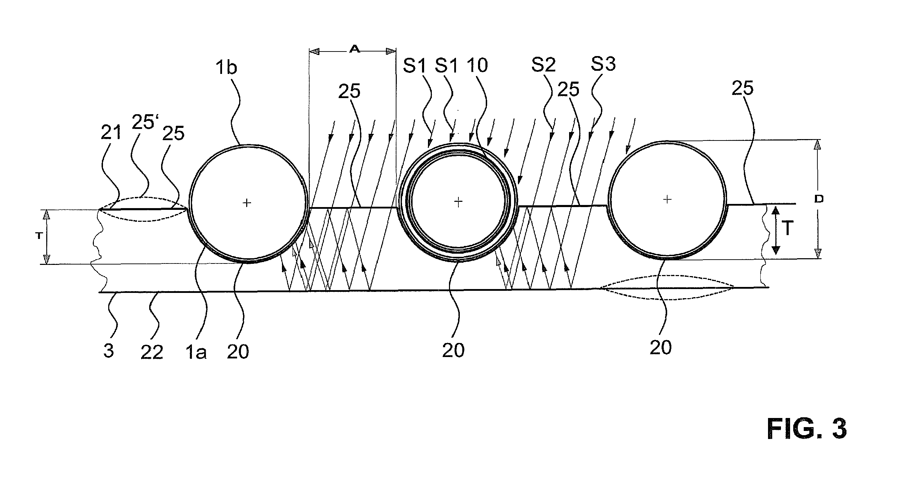

In Fig. 3 werden die Vakuumröhren 1 mit gleichem Durchmesser D gezeigt. Alternativ können die Vakuumröhren 1 auch unterschiedliche Durchmesser D aufweisen, wobei die Rille 20 entsprechend dem Durchmesser D der Vakuumröhre 1 angepasst wird.

Der den quaderförmigen Halter 2 nach oben begrenzende Bereich zwischen den einzelnen Rillen wird als Eintrittsfläche 25 bezeichnet. Über diese Eintrittsfläche 25 können Strahlen S1, S2, S3 des Sonnenlichts in den Halter 2 eintreten. Die Eintrittsfläche 25 kann eben, konkav, wie mit Eintrittsfläche 25' angedeutet, oder konvex sein. Eine ebene Eintrittsfläche 25 ist besonders vorteilhaft, denn dies erlaubt eine besonders einfache Reinigung der Eintrittsfläche 25 und des Teils der Vakuumröhren 1, welcher über die Eintrittsfläche 25 hervorsteht.

Die Eintrittsfläche 25 ist vorzugsweise mit einer Schicht beschichtet, welche in eine erste Richtung für Lichtstrahlen durchlässig ist, so dass also Sonnenlicht in den Halter 2 eintreten kann. Eine solche Schicht kann beispielsweise durch geeignete Nanotechnologie bereitgestellt werden. Die Reflektion der Strahlen S3 an der Innenseite 25 des Halters 2 kann dann erhöht werden. Das heisst mit anderen Worten, dass die Reflektion an der Innenseite über das Mass der normalerweise vorhandenen Rayleigh-Reflektion erhöht werden kann.

Eine mögliche geeignete Nanotechnologie wird beispielsweise im Artikel "Optical thin films consisting of nanoscale laminated layers" in "Applied Physics Newsletter" Volume 80, Number 14 offenbart.

Die Tiefe T der Rillen 20 entspricht vorzugsweise dem halben Durchmesser (T=D/2) der Vakuumröhre 1, welche der entsprechenden Rille 20 zugeordnet ist. Alternativ kann die Tiefe T aber auch von dieser Grösse abweichen. Beispielsweise ist es denkbar, dass die Tiefe T 10% grösser bzw. kleiner als der halbe Durchmesser ist. Eine Abweichung von 25% ist ebenfalls denkbar. Demnach ist ein unterer Teil 1a der Vakuumröhre 1 im Halter 2 eingelegt. Ein oberer Teil 1b der Vakuumröhre 1 kann als hervorstehend bezeichnet werden, da er nicht im Halter 2 eingelassen ist. Der obere Teil 1b der Vakuumröhre 1 wird direkt mit Sonnenlicht versorgt. Der untere Teil 1a der Vakuumröhre wird indirekt über den Halter 2 und einen Reflektor 3 mit Sonnenlicht versorgt.

Falls die Tiefe aufgrund der oben beschriebenen Abweichung grösser ist als der halbe Durchmesser der Vakuumröhre 1, kann die Rille 20 als U-förmig bezeichnet werden. Das heisst die Rille 20 weist in einem ersten Abschnitt links und rechts eine ebene Seitenwand auf. In einem zweiten Abschnitt geht die Seitenwand dann in eine halbkreisförmige Gestalt über. Demnach beginnt der zweite Abschnitt vom Rillengrund her gesehen auf der Höhe, bei welcher das Zentrum der eingelegten Vakuumröhre zu liegen kommt. Alternativ kann die ebene Seitenwand auch als gekrümmte Seitenwand ausgestaltet sein. Weitere Alternativen sind ebenfalls denkbar, sofern der erste Abschnitt den Querschnitt der Rille 20 nicht verengt. Die Rille 20 weist demnach im ersten Abschnitt eine Breite auf, welche gleich gross oder grösser ist als der Durchmesser der Vakuumröhre 1, so dass diese von oben her in die Rille 20 eingelegt werden kann. Alternativ können sich die ersten Abschnitte auch winklig erstrecken, so dass die Verschattung der Vakuumröhre 1 minimiert werden kann.

Die Rillen 20 liegen seitlich beabstandet zueinander. Der Abstand wird als Abstand A angegeben. Vorzugsweise ist der Abstand A zwischen 0.5 und 1.5 mal dem Durchmesser der Röhre (A = 0.5*D...1.5*D). Besonders bevorzugt wird ein Abstand A, der zwischen 0.6 und 1.2 mal dem Durchmesser D entspricht (A = 0.6*D...1.2*D).

Um die Breite der erfindungsgemässen Vorrichtung besonders gut zu nutzen, ist der Abstand A insbesondere kleiner als der Durchmesser D. Beispielsweise entspricht der Abstand A hier zwischen 0.6 und 0.9 mal dem Durchmesser D (A = 0.6*D...0.9*D). Der Abstand zwischen den Vakuumröhren kann vergleichsweise klein gewählt werden, das heisst, dass der Wirkungsgrad, verglichen mit Vorrichtungen des Standes der Technik, grösser wird. Mit anderen Worten erlaubt der Halter 2 die Anordnung von einer grösseren Anzahl Vakuumröhren auf der gleichen Kollektorfläche. Bei Vakuumröhren mit einem Durchmesser von 38 mm ist der Abstand A demnach zwischen 22.8 mm und 34.2 mm.

Vorzugsweise weist ein erfindungsgemässer Halter auf einer Breite von einem Meter bezogen auf ein Rohrdurchmesser von 38 mm 13 bis 16 Rillen 20 auf. Das heisst mit anderen Worten, dass ein erfindungsgemässes Kollektorelement 13 bis 16 Vakuumröhren 1 aufweist.

Auf der Unterseite 22 des Halters 2 ist der Reflektor 3, der mit einer reflektierenden Schicht ausgestattet ist, angeordnet. Die reflektierende Schicht kann auch als Spiegelschicht bezeichnet werden. Der Reflektor 3 dient zur Reflektion des Sonnenlichts, welches in den Halter 2 eingetreten ist. Durch diese Reflektion ist es möglich, auch den unteren Teil 1a der Vakuumröhre 1 mit Sonnenlicht zu bestrahlen. Der untere Teil 1a wird so indirekt mit den Sonnenlicht versorgt.

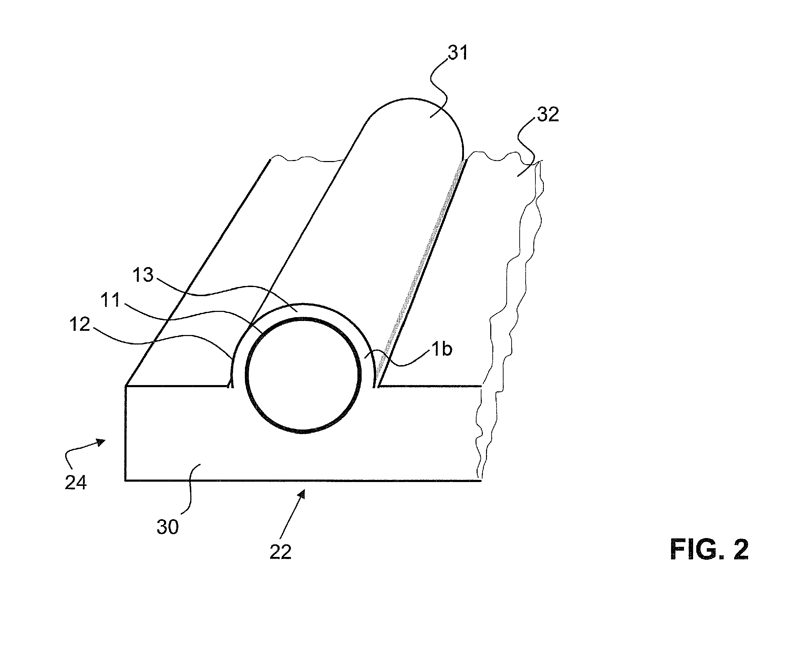

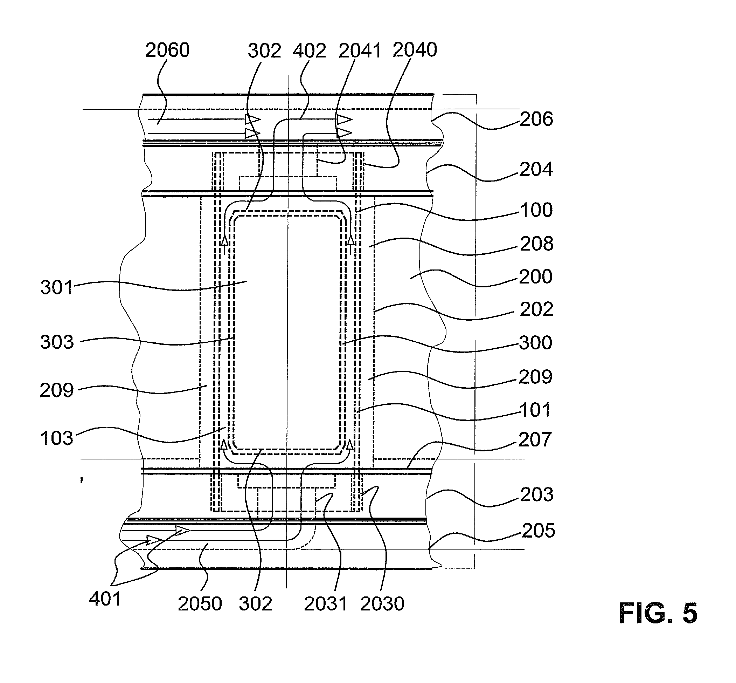

In der Fig. 2 wird ein zweites Ausführungsbeispiel dargestellt. Gleiche Bezugszeichen bezeichnen in allen Fig. gleiche oder ähnliche Merkmale. Nach Fig. 2 kann das Aussenrohr 12 und der Halter 2 ein einziges Element bilden, das Gehäuse 30 . Dann ist der Halter 2 aus Fig. 1 kein Vollmaterialelement, sondern ein beispielsweise Quader bildet den Bodenteil des Gehäuses 32. Mit dem Bezugszeichen 31 ist der Röhrenteil des Gehäuses bezeichnet. Mit anderen Worten, das Innenrohr 11 ist innerhalb eines evakuierten Gehäuses 30 aus angeordnet. Die Absorberschicht 10 ist in diesem evaluierten Raum 13 geschützt. Vorteilhafterweise ist die Absorberschicht 10 um das gesamte Rohr herum im Querschnitt gesehen über einen wesentlichen Teil der Länge des Rohrs angeordnet. Natürlich kann die Oberseite des Aussenrohrs 12 auch mit dem Gehäuse 30 eben ausgestaltet sein. Wesentlich ist, dass das wärmeübertragende Fluid innerhalb des Innenrohrs 11 angeordnet ist. Dabei kann hier auch auf das Einsetzen eines weiteren Rohrs 300 nach Fig. 5 abgestellt werden. Diese Ausführungsform gehört ebenfalls zur Kombination der Erfindung.

Egal, ob nach dem Ausführungsbeispiel der Fig. 1 oder der Fig. 2, der Reflektor 3 kann beispielsweise direkt auf der Unterseite 22 des Halters 2 oder des Gehäuses 30 angeordnet werden. Der Reflektor 3 ist vorzugsweise ein Aluminiumblech mit einer Eloxalschicht. Ein solches Aluminiumblech kann auf die Unterseite 22 des Halters aufgeklebt oder anderweitig befestigt werden. Alternativ kann das Aluminiumblech auch im Halter 2 eingegossen bzw. eingelassen sein. Das Vorsehen des Reflektors innerhalb des Gehäuses 30 nach Fig. 2 schützt den Reflektor zudem. Es ist auch möglich, den Unterteil des Gehäuses 30 undurchsichtig, vorzugsweise als Reflektor, auszubilden und nur den oberen Abschnitt durchsichtig.

Alternativ kann der Reflektor 3 auch eine Spiegelschicht sein, welche direkt auf die Unterseite 22 des Halters 2 mit einem Aufdampfverfahren aufgebracht wird. Demnach ist der Reflektor 3 eine dünne Schicht auf der Unterseite 22 des Halters 2. Ein Aufdampfverfahren erweist sich als besonders vorteilhaft, denn die Beschichtung kann bei konkaven oder konvexen oder parabolförmigen oder ebenen Ausgestaltungen der Unterseite 22 in einer effizienten Art und Weise aufgebracht werden.

Alternativ ist es auch möglich, die reflektierende Schicht auf einem nicht gezeigten Träger anzuordnen. In diesem Fall werden der Träger und die reflektierende Schicht als Reflektor bezeichnet. Dieser Träger wird im unteren Bereich des Halters 2 eingelassen oder eingegossen. Das heisst in diesem Fall, dass der Träger mit der Reflektorschicht vollständig durch den Halter aufgenommen wird. Mit anderen Worten ist der Reflektor hier vollständig durch den Halter 2 umgeben.

Das beschriebene Anbringen einer Reflektorschicht hat den Vorteil, dass die Reflektorschicht 3 durch den Halter 2 von den Eingangs beschriebenen Witterungseinflüssen geschützt ist. Die Reflektorschicht kann somit über die Lebensdauer des Kollektorelementes eine bleibende Oberflächengüte behalten.

Die Seitenwände 24 sind, vorzugsweise analog zur Unterseite 22, ebenfalls mit einer reflektierenden Schicht ausgestattet. Demnach werden Strahlen, welche vom Inneren des Halters 2 auf die Seitenwände 24 treffen, an den Seitenwänden 24 reflektiert. Die Strahlen, welche in den Halter 2 eingetreten sind, können also nicht über die Seitenwände 24 austreten.

Alternativ ist zudem denkbar, die Seitenwände 24 mit Solarzellen bzw. photovoltaischen Zellen auszustatten, wobei die Reflektorschicht mit diesen Zellen mindestens teilweise oder ganz ersetzt wird. Mit den Solarzellen kann dann elektrische Energie bereitgestellt werden, welche beispielsweise die Umwälzpumpe für das Wärmeträgermedium und/oder die Steuerelektronik zu versorgen.

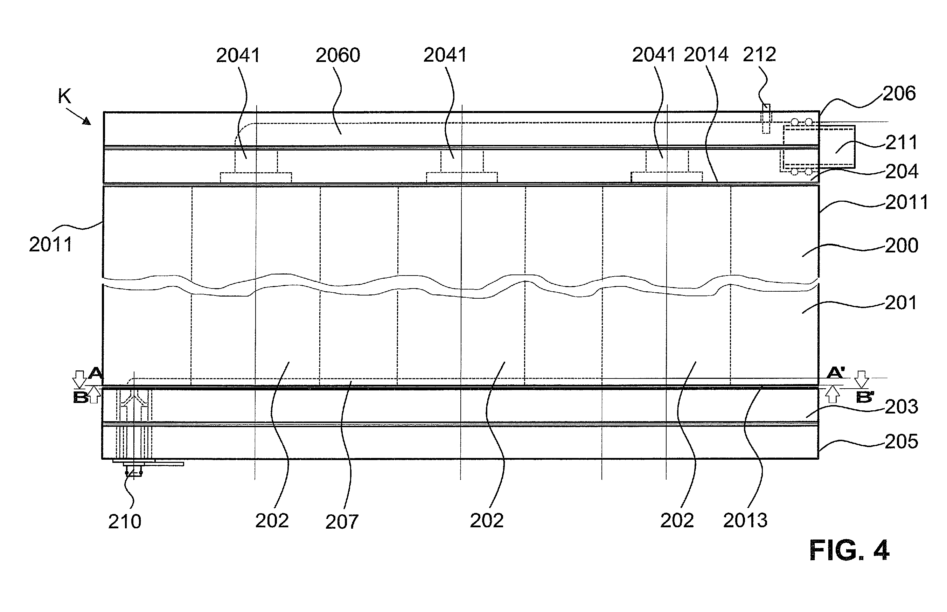

In Fig. 4 werden drei nebeneinander im Halter 2 liegende Vakuumröhren 1 in einer Schnittdarstellung gezeigt. Ebenfalls wird hier das einfallende Sonnenlicht als Strahlen S1, S2 und S3 gezeigt.

Die Strahlen S1 bescheinen den oberen Teil 1b der Vakuumröhre 1.

Der Strahl S2 tritt durch die Eintrittsfläche 25 in den Halter 2 ein und wird an der Reflektorschicht 3 reflektiert und bescheint somit den unteren Teil 1a der Vakuumröhre indirekt.

Der Strahl S3 tritt durch die Eintrittsfläche 25 in den Halter 2 ein und wird an der Reflektorschicht 3 reflektiert. Im weiteren Verlauf wird der Strahl S3 dann an der Innenseite an der Eintrittsfläche erneut reflektiert. Durch eine weitere Reflektion an der Reflektorschicht 3 kann der Strahl dann den unteren Teil 1a der Vakuumröhre 1 indirekt erreichen.

Die Vakuumröhren 1 werden hier nicht von einem bestimmten Sektor bestrahlt, wie dies bei einem Reflektor des Standes der Technik der Fall ist. Falls die Sonne flach steht, kann es sein, dass die Vakuumröhre indirekt über eine Eintrittsfläche 25, welche nicht direkt neben der entsprechenden Vakuumröhre liegt, von unten her bestrahlt wird. Somit kann bei tiefem Sonnenstand ein grösserer Anteil der Strahlen genutzt werden, als bei Kollektoranlagen des Standes der Technik. Der Wirkungsgrad wird daher erhöht.

In alternativen Ausführungsbeispielen kann der Halter 2 mit einem vorzugsweise farblosen Medium, wie einem Fluid, einem Gas oder Vakuum gefüllt sein. Hierbei bilden die Rillen 20, die Oberseite 21, die Unterseite 22 und die Seitenwände 24 eine Art Hülle oder Hohlkörper, welche das Fluid, das Gas oder das Vakuum aufnehmen können. Falls das Medium ein Fluid ist, muss dieses derart gewählt werden, dass dieses im Winter nicht einfriert und die Hülle beschädigt. Solche Fluide sind dem Fachmann bekannt. Vorzugsweise wird Wasser mit Äthylenglykol, Wasser mit Hexanol, oder andere Ethanole eingesetzt. Alternativ kann das Fluid auch ein synthetisch hergestelltes Öl sein. Hierbei kann die Reflektionsschicht sowohl auf der Aussenseite als auch auf der dem Hohlraum oder Innenraum zugewandten Fläche angebracht werden.

In einer weiteren alternativen Ausführungsform kann der Halter 2 ebenfalls als Hülle ausgestaltet sein. Die Oberseite 21 des Halters 2 weist in diesem Ausführungsbeispiel eine rechteckige Öffnung auf und die entsprechenden Seitenwände 24 weisen eine halbkreisförmige Öffnung auf, so dass sich eine Art offene Rille bildet. Die Vakuumröhre 1 kann dann in diese offene Rille eingelegt werden und mit Hilfe eines Klebstoffes mit den Seitenkanten verbunden werden. Der Klebstoff übernimmt gleichzeitig die Dichtwirkung.

Ferner kann in weiteren Ausführungsbeispielen die Unterseite 22 und optional die Seitenwände 24 aus einem metallischen Werkstoff sein, beispielsweise aus einem tiefgezogenen oder gestanzten Metallblech. Die Oberseite 21 ist hier aus einem der oben genannten Materialien. Somit bilden die Unterseite 22 und die Seitenwände 24 eine Art Wanne, welche das Fluid, das Gas oder das Vakuum aufnehmen kann. Mit dem Deckel kann die Wanne abgeschlossen werden und somit wird ein Hohlkörper bereitgestellt. Die Oberfläche der Seitenwände 24 und der Unterseite 22, welche dem Innenraum des Hohlkörpers zugewandt sind, können poliert sein oder mit der Reflektionsschicht versehen sein. Durch das Anordnen der Reflektionsschicht an der dem Innenraum zugewandten Seite ist diese gegen Witterungseinflüsse gut geschützt.

Fig. 4 und 5 zeigen ein erfindungsgemässes Kollektorelement K gemäss einem weiteren Ausführungsbeispiel der Erfindung, das wie aus Fig. 5 ersichtlich mindestens ein Absorberelement 100 und einen Halter 200 umfasst. Ferner umfasst das Kollektorelement ein vorteilhafterweise jedem Absorberelement 100 zugeordnetes Wärmespeicherelement 300.

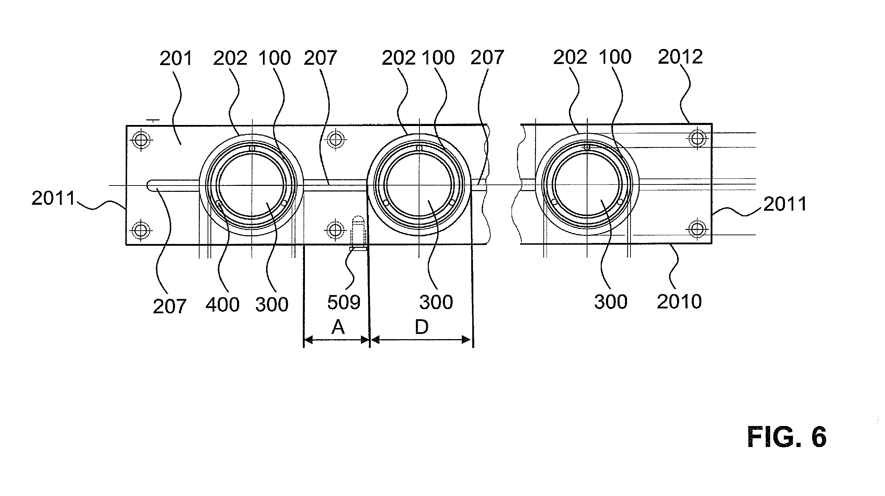

Der Halter 200 umfasst vorzugsweise einen Halterkörper 201, welcher aufgrund seiner lichtleitenden Eigenschaft auch als Lichtleiterkörper bezeichnet werden kann. Der Halterkörper 201 hat vorzugsweise die Form eines Quaders und weist somit gemäss Fig. 6 eine Unterseite 2010, zwei Seitenflächen 2011, eine Oberseite 2012, eine untere Stirnseite 2013 und eine obere Stirnseite 2014 auf. Sonnenlicht kann über die Oberseite 2012 in den Haltekörper 201 eintreten. Ferner weist das Kollektorelement K bzw. der Halterkörper 201 mindestens zwei zylindrische Durchbrüche 202 auf. Die Öffnungen 202 verlaufen, vorzugsweise parallel zueinander, von der unteren Stirnseite 2013 zur oberen Stirnseite 2014 durch den Halterkörper 201. Die zylindrischen Durchbrüche 202 dienen der Aufnahme von jeweils einem Absorberelement 100.

Vorzugsweise ist der Halterkörper 201 aus einem transparenten oder durchscheinenden Material, wie beispielsweise Plexiglas, Glas oder aus anderen geeigneten Materialien, welche das Sonnenlicht mit einem Transmissionswert von über 90% leiten und vorzugsweise temperaturbeständig sind. Das durchscheinende Material des Lichtleiterkörpers hat vorzugsweise einen Brechungsindex n zwischen 1,05 und 1,5. Wird beispielsweise Plexiglas eingesetzt, so ist der Brechungsindex n=1.49. In alternativen Ausführungsbeispielen kann der Halterkörper 201 mit einem Fluid oder Gas gefüllt sein, wobei die Begrenzungsflächen des Halterkörpers 201 einen Hohlkörper bilden.

Die Unterseite 2010 sowie die zwei kurzen Seitenflächen 2011 und die untere Stirnseite 2013 als auch die obere Stirnseite 2014 des Halterkörpers 201 sind vorzugsweise mit einer Reflektionsschicht oder Spiegelschicht ausgestattet. Diese Reflektionsschicht dient der Reflektion des einfallenden Sonnenlichtes. Die Reflektionsschicht kann beispielsweise mit einem Aufdampfverfahren aufgebracht werden. Falls der Halterkörper 201 als Hohlkörper ausgebildet ist, kann die Reflektionsschicht oder die Spiegelschicht sowohl auf der Aussenseite als auch auf der Innenseite, welche der Innenseite des Hohlraumes zugewandt ist, angeordnet sein.

Eine aufgedampfte Beschichtung hat den Vorteil, dass die Ausgestaltung der unteren Fläche 2010 eben, konvex, konkav oder parabelförmig ausgeführt werden kann. Eine mühsame Verformung allfälliger Reflektorbleche, wie dies bei Kollektorelementen aus dem Stand der Fall ist, entfällt bei diesem Haltekörper. Die Spiegelschicht kann beispielsweise eine geeignete raue Oberfläche aufweisen, um eine diffuse Streuung der einfallenden Sonnenstrahlen zu ermöglichen. Es können auch sehr kleine kugelförmige Teilchen in die Randzonen des Lichtleiterkörpers in unmittelbarer Nähe der Spiegelschichtflächen eingebracht werden, damit eine Rayleigh-Streuung/Reflexion entsteht. Die eben beschriebene Behandlung der Reflektionsschichten ermöglicht eine wirkungsvollere Bestrahlung der rückseitigen Flächen der Absorberelementen 100. Alternativ kann die Beschichtung auch als poliertes Blech ausgestaltet sein.

Sofern der Lichtleiterkörper aus dem Material PMMA (Polymethylmeth-acrylat) besteht, verhindern die Spiegelschichten oder Reflexionsschichten auch langfristig die Feuchtigkeitsaufnahme durch das Material.

Alternativ kann auch die Lichteintrittsfläche 2012 auf Basis der chemischen Nanotechnologie behandelt und versiegelt werden, so dass das Anhaften von Schmutz- und Fremdstoffen praktisch verhindert wird und auch langfristig das Abperlen von Wasser gewährleistet wird.

Auf der unteren Stirnseite 2013 ist ein erstes inneres Profilelement 203 und auf der oberen Stirnseite 2014 ist ein zweites inneres Profilelement 204 angeordnet. Die inneren Profilelemente 203, 204 erstrecken sich vorzugsweise über die ganze Oberfläche der Stirnseiten 2013, 2014. Auf dem ersten inneren Profilelement 203 ist ein erstes äusseres Profilelement 205 und auf dem zweiten inneren Profilelement 204 ist ein zweites äusseres Profilelement 206 angeordnet. Vorzugsweise werden die inneren und äusseren Profilelemente 203, 204, 205, 206 mittels einer Schraubverbindung miteinander und mit dem Halterkörper 201 verbunden.

Vorzugsweise werden die Profilelemente 203, 204, 205, 206 aus einem Kunststoff, wie PMMA oder PEEK, oder einem Metall, wie Aluminium, hergestellt.

Die untere Stirnseite 2013 des Halterkörpers 201 weist eine Nute 207 auf, welche sich von der Stirnseite 2013 in den Halterkörper 201 hinein erstreckt. Ferner ist die Nute 207 derart angeordnet, dass die Nute 207 alle zylindrischen Durchbrüche 202 miteinander verbindet. Vorzugsweise ist die Nute 207 in ihrem Querschnitt als halbkreisförmig ausgestaltet. Andere Querschnittsformen, wie beispielsweise rechteckig oder quadratisch, sind ebenfalls denkbar. Die Nute 207 erstreckt sich vorzugsweise nur über eine geringe Tiefe in die Stirnseite 2013 hinein. Die Tiefe der Nute 207 ist dabei so gewählt, dass die Luft bei der Herstellung des Vakuums möglichst einfach und effizient aus dem Hohlraum entfernt werden kann.

Zwischen der unteren Stirnseite 2013 und dem ersten inneren Profilelement 203, sowie zwischen der oberen Stirnseite 2014 und dem zweiten inneren Profilelement 204 wird vorzugsweise eine nicht dargestellte Dichtung angeordnet. Die Dichtung kann beispielsweise durch eine Beschichtung der Stirnseiten 2013, 2014 erzielt werden. Alternativ kann auch eine elastische Dichtung in entsprechende nicht dargestellte Vertiefungen eingelassen werden. Aufgrund der unten beschriebenen Evakuierung von Hohlräumen, welche unter anderem durch die Profilelemente begrenzt werden, ist eine besonders dauerhafte Ausgestaltung der Dichtung nötig.

In der Fig. 6 wird ein modifiziertes erfindungsgemässes Kollektorelement in einer Ansicht von vorne dargestellt.

Die zylindrischen Durchbrüche 202 weisen einen Durchmesser D auf und liegen seitlich beabstandet zueinander. Der Abstand wird als Abstand A angegeben. Vorzugsweise ist der Abstand A zwischen 0.5 und 1.5 mal dem Durchmesser D des zylindrischen Durchbruches 202 (A = 0.5*D...1.5*D). Besonders bevorzugt wird ein Abstand A, der zwischen 0.6 und 1.2 mal dem Durchmesser D entspricht (A = 0.6*D...1.2*D).

Um die Breite der erfindungsgemässen Vorrichtung besonders gut zu nutzen, ist der Abstand A insbesondere kleiner als der Durchmesser D des zylindrischen Durchbruches 202. Beispielsweise entspricht der Abstand A hier zwischen 0.6 und 0.9 mal dem Durchmesser D (A = 0.6*D...0.9*D). Der Abstand zwischen den zylindrischen Durchbrüchen 202 kann vergleichsweise klein gewählt werden, das heisst, dass der Wirkungsgrad, verglichen mit Vorrichtungen des Standes der Technik, grösser wird. Mit anderen Worten erlaubt der Halterkörper 201 die Anordnung von einer grösseren Anzahl von zylindrischen Durchbrüchen auf der gleichen Kollektorfläche. Bei zylindrische Durchbrüchen mit einem Durchmesser von 38 mm ist der Abstand A demnach zwischen 22.8 mm und 34.2 mm.

Vorzugsweise weist ein erfindungsgemässer Halter 200 auf einer Breite von einem Meter 13 bis 16 zylindrische Durchbrüche 202 auf. Das heisst mit anderen Worten, dass ein erfindungsgemässes Kollektorelement 13 bis 16 Absorberelemente 100 aufweist.

Zwischen der Oberseite 2012 und der Unterseite 2010 sind die zylindrischen Durchbrüche vorzugsweise mittig oder zentrisch angeordnet. Alternativ ist es auch möglich, die zylindrischen Durchbrüche näher bei der Oberseite 2012 oder näher bei der Unterseite 2010 anzuordnen. Diese Anordnung kann auch als exzentrisch bezeichnet werden.

Fig. 7 zeigt einen Ausschnitt aus der Fig. 6, wobei die Anordnung des Absorberelementes 100 im Halterkörper 201 und des Wärmespeicherelementes 300 im Absorberelement 100 beispielhaft gezeigt wird. Eine Draufsicht der Anordnung wird in Fig. 5 gezeigt.

Der zylindrische Durchbruch 202 wird durch eine hohlzylindrische Mantelfläche 2020 begrenzt. Das Absorberelement 100 ist hier konzentrisch im zylindrischen Durchbruch 202 mit Hilfe von unten beschriebenen Mitteln angeordnet. Eine exzentrischen Anordnung ist auch möglich. Vorzugweise weist das Absorberelement 100 bzw. die Länge der Absorberschicht im wesentlichen eine gleiche Länge, wie der zylindrische Durchbruch 202 auf. Je nach Art der Lagerung im zylindrischen Durchbruch 202 kann das Absorberelement 100 aber auch kürzer oder länger als der zylindrischen Durchbruch 202 ausgestaltet sein.

Das Absorberelement 100 umfasst vorzugsweise eine Absorberschicht 101 und das Absorberrohr 102. Die Absorberschicht 101 ist auf der Aussenseite des Absorberrohres 102 angeordnet. Das Absorberelement 100 weist einen maximalen Aussendurchmesser auf, welcher kleiner als der Durchmesser D des zylindrischen Durchbruches 202 ist. Dadurch entsteht zwischen der Mantelfläche 2020 des zylindrischen Durchbruches 202 und der Absorberschicht 101 ein Ringspalt 208. Der Ringspalt 208 bildet einen Teil des entstehenden Hohlraums 209, welcher unten durch das erste innere Profilelement 203 und oben durch das zweite innere Profilelement 204 begrenzt wird. Dieser Hohlraum 209 kann evakuiert werden.

Das Absorberrohr 102 ist vorzugsweise aus einem gut wärmeleitenden Material, beispielsweise einem metallischen Werkstoff hergestellt. Besonders gut geeignet ist Kupfer, Aluminium, Messing oder rostfreier Stahl. Die Absorberschicht 101 kann beispielsweise auf das Absorberrohr 102 aufgedampft oder als dünne Folie aufgepresst werden. Vorzugsweise ist die Absorberschicht 101 aus Tinox (Titanoxid), Metall-Karbid, Schwarzchrom oder schwarzer Farbe hergestellt. Da die Absorberschicht 101 im Vakuum liegt, ist sie von jeglicher Abnützung geschützt. Zudem treten aufgrund des Vakuums praktisch keine Wärmeverluste an die Umgebung auf.

Alternativ kann die Absorberschicht auch selektiv beschichtet sein. Solche selektiven Beschichtungen haben den Vorteil, dass die Wärmeverluste durch Wärmestrahlung reduziert werden können. Solche selektiven Beschichtungen sind dem Fachmann bekannt.

In der Darstellung gemäss Fig. 5 ist ersichtlich, dass das Absorberelement 100 in einer ringförmigen Nute 2030 im ersten inneren Profilelement 203 und in einer ringförmigen Nute 2040 im zweiten inneren Profilelement 204 gelagert ist. Vorzugsweise werden die Ringnuten 2030, 2040 vor dem Einführen des Absorberelementes 100 mit einem dauerelastischen Silikon-Kleber bzw. mit einer Silikon-Dichtmasse benetzt. Ferner ist ersichtlich, dass die inneren Profilelemente 203, 204 den zu evakuierenden Hohlraum 209 begrenzen. Der zu evakuierende Hohlraum 209 setzt sich im wesentlichen aus dem Hohlraum, welcher durch den Ringspalt 208 entsteht, und den Nuten 207 zusammen. Vorzugsweise ist der Innendruck des Vakuums kleiner als 0.1 Pascal. Statt diesem Ringspalt 208 und den Verbindungsnuten 207 kann der Vakuumraum auch aus dem gesamten Gehäuse 30 aus Fig. 2 bestehen. Wesentlich ist nur die Abfolge (nach oben durchsichtiges) Vakuumgehäuse 11, Vakuumraum 13, Absorberschicht 101 auf wärmeleitendem Rohr 100 mit innenliegendem Fluidweg, welches noch ein Innenrohr 300 mit optionalem Latentspeicher 301 aufweisen kann.

Zur Evakuierung weist das Kollektorelement einen Evakuierungsanschluss 210, welcher beispielsweise in Fig. 3 ersichtlich ist. Der Evakuierungsanschluss ist über die Nute 207 mit den zylindrischen Durchbrüchen 202 verbunden. Das heisst, über den Evakuierungsanschluss 210 kann die Luft, welche sich in Ringspalten 208 und in der Nute 207 befindet, entfernt werden. Der Evakuierungsanschluss 210 ist mit einem geeigneten Absperrventil verschlossen.

Wie in den Fig. 5, 6 und 7 ist zudem das Wärmespeicherelement 300 ersichtlich. Das Wärmespeicherelement 300 ist vorzugsweise ein mit einem Wärmespeichermedium befüllbarer Hohlkörper mit einem Hohlraum 301. Im vorliegenden Ausführungsbeispiel ist der Hohlkörper im wesentlichen zylindrisch ausgestaltet. Demnach umfasst der Hohlkörper eine rohrförmige Hohlkörperseitenwand 303 und zwei Hohlkörperdeckel 302, welche stirnseitig an der Hohlkörperwand 303 angeordnet sind.

Der Aussendurchmesser des Wärmespeicherelementes 300 ist kleiner gewählt als der Innendurchmesser des Absorberrohres 102 Das Wärmespeicherelement 300 wird mit Zentriernocken 400 konzentrisch im Absorberrohr 102 gelagert. Die Zentriernocken 400 sind vorzugsweise am Absorberrohr 102 oder an der Hohlkörperseitenwand 303 angeschweisst und derart ausgestaltet, dass das Wärmespei-cherelement 300 über eine von einer Haftreibungskraft resultierenden Haltekraft gehalten werden kann. Vorzugsweise werden pro Lagerstelle je drei Zentriernocken 400 in einem Winkel von 120° angeordnet. Über die gesamte Länge des Wärmespeicherelementes 300 werden mehrere solche Lagerstellen angeordnet. Durch die konzentrische Lagerung des Wärmespeicherelementes 300 im Absorberrohr 102 entsteht ein ringspaltförmiger Zwischenraum 103. Dieser Zwischenraum 103 ist durch ein Wärmeträgermedium durchströmbar. Insbesondere kann damit die Wärmeträgermenge auf einen absorbernahen Bereich, nämlich einen Ringspalt konzentriert werden. Innerhalb des Wärmespeicherrohrs 300 kann Luft sein, es kann ein Latentspeichermaterial bestehen oder - etwas ungünstiger - Vakuum oder ein anderer Stoff. Der Vorteil dieses Mediums in Raum 301 ist seine Abgeschiedenheit über das Wärmeträgermedium im Raum 103. Dieses Medium in 301 ist nicht mit "kalten" Elementen in Kontakt, sondern steht in leicht erreichbarem Gleichgewicht mit der durch den Absorber aufgenommenen Wärmemenge. Dabei wird - in technischer Hinsicht - noch der Vorteil erzielt, dass bei Solarkollektoren eine nicht unwesentliche Menge eines Latentspeichermediums mit den Solarkollektoren angeordnet wird, so dass der übliche Speicherraum innerhalb eines Hauses wegfällt und anderweitig genutzt werden kann oder eben eine solche Anlage weniger Raum bedarf.

Vorzugsweise ist der Hohlraum 301 des Wärmespeicherelementes 300, das auch latenter Wärmespeicher bezeichnet werden kann, mit einem Phasenwechselmaterial bzw. einem Phasenübergangsmaterial aufgefüllt. Beispielsweise eignet sich mikroverkapseltes Paraffin oder mikroverkapseltes Paraffin-Kügelchen. Diese wachsartigen Materialien können die Wärme reversibel speichern.

Sobald die Absorberelemente 100 Solarenergie, also Wärme, absorbieren, wird die Wärme auf das Wärmeträgermedium, welches im Zwischenraum 103 fliesst, übertragen. Zudem wird Wärme auch teilweise auf das Wärmespeicherelement 300 übertragen, wobei sich das Phasenwechselmaterial ebenfalls erwärmt. Bei genügender Erwärmung des Phasenwechselmaterials ändert das Phasenwechselmaterial seinen Zustand und verflüssigt sich. Mit anderen Worten heisst dies, dass ein Teil der durch die Sonneneinstrahlung vorhandenen Wärmeenergie durch das Wärmeträgermedium und ein anderer Teil durch das Phasenwechselmaterial aufgenommen wird.

Durch den Phasenwechsel wird die Wärmeenergie durch das Phasenwechselmaterial gespeichert und kann zu einem Zeitpunkt abgegeben werden, in welchem die Sonneneinstrahlung abnimmt oder nicht mehr vorhanden ist. Dies kann beispielsweise bei einer Wetteränderung oder in der Nacht der Fall sein. Durch Abgabe der Wärmeenergie vom Phasenwechselmaterial an das Wärmeträgermedium erstarrt das Phasenwechselmaterial.

Vorzugsweise hat das Phasenwechselmaterial einen Schmelzpunkt, der zwischen 20°C und 90°C liegt. Die geografische Lage ist dabei für die Wahl des Schmelzpunktes ausschlaggebend. Bei geografischen Lagen mit höheren Durchschnittstemperaturen wird ein Phasenwechselmaterial mit einem höheren Schmelzpunkt eingesetzt, als bei Lagen mit tieferen Durchschnittstemperaturen. Weitere Bedarfskriterien, wie beispielsweise die Betriebstemperatur des Wärmeträgermediums beeinflussen die Wahl des Phasenwechselmaterials ebenfalls. Vorteilhafterweise ist die Schmelzpunkttemperatur etwas grösser, also beispielsweise 3°C bis 10°C, als die optimale Betriebstemperatur.

Wie in der Fig. 4 gezeigt, weisen die innere Profilelemente 203, 204 je eine durchgehende Öffnung 2031, 2041 auf. Die äusseren Profilelemente 205, 206 weisen je einen Kanal 2050, 2060 auf. Durch den Kanal 2050 im ersten äusseren Profilelement 205 und die Öffnung 2031 im ersten inneren Profilelement 203 kann das kalte Wärmeträgermedium dem Zwischenraum 103 zugeführt werden. Das kalte Wärmeträgermedium kann beispielsweise von einem Wärmetauscher resultieren und wird mit den Pfeilen 401 dargestellt. Das kalte Wärmeträgermedium 401 tritt somit durch den Kanal 2050 über die Öffnung 2031 in den Zwischenraum 103 ein. Im Zwischenraum 103 kann das Wärmeträgermedium 401 Wärme, welche durch das Absorberelement 100 und durch das Wärmespeicherelement 300 bereitgestellt wird, aufnehmen. Das warme Wärmeträgermedium 402 verlässt den Zwischenraum 103 über die Öffnung 2041 und kann in den Kanal 2060 geleitet werden. Über ein Anschlusselement 211, wie dieses in Fig. 3 dargestellt ist, kann das warme Wärmeträgermedium beispielsweise einem Wärmetauscher zugeführt werden.

Sofern die Profilelemente 204, 206, welche mit dem warmen Wärmeträger in Berührung kommen, aus Kunststoff sind, können die Oberflächen beispielsweise mit einer metallischen Beschichtung versehen werden. Dadurch kann ein Durchlass von Wasserdampf zuverlässig verhindert werden.

Ferner kann im Kanal 2060, durch welchen das warme Wärmeträgermedium fliesst, mit einem Temperatursensor 212 (siehe Fig. 4) versehen sein, welcher die Temperatur des Wärmeträgermediums messen kann. Somit kann indirekt die Ausgangstemperatur der Wärmeträgerflüssigkeit überwacht werden. Diese Grösse kann als eine Steuer/Regelgrösse verwendet werden, so dass eine Schutzplane 505 beispielsweise bei Ausfall der Umwälzpumpe für das Wärmeträgermedium, beispielsweise Wasser, über die Oberseite des Kollektors gezogen werden kann, so dass kein weiterer wesentlicher Wärmeeintrag mehr erfolgt. Die Plane ist undurchsichtig und wirkt isolierend. Ferner kann eine Pufferbatterie für den Antrieb vorgesehen sein, so dass dieser auch bei einem Stromausfall noch diese Bewegung steuern kann.

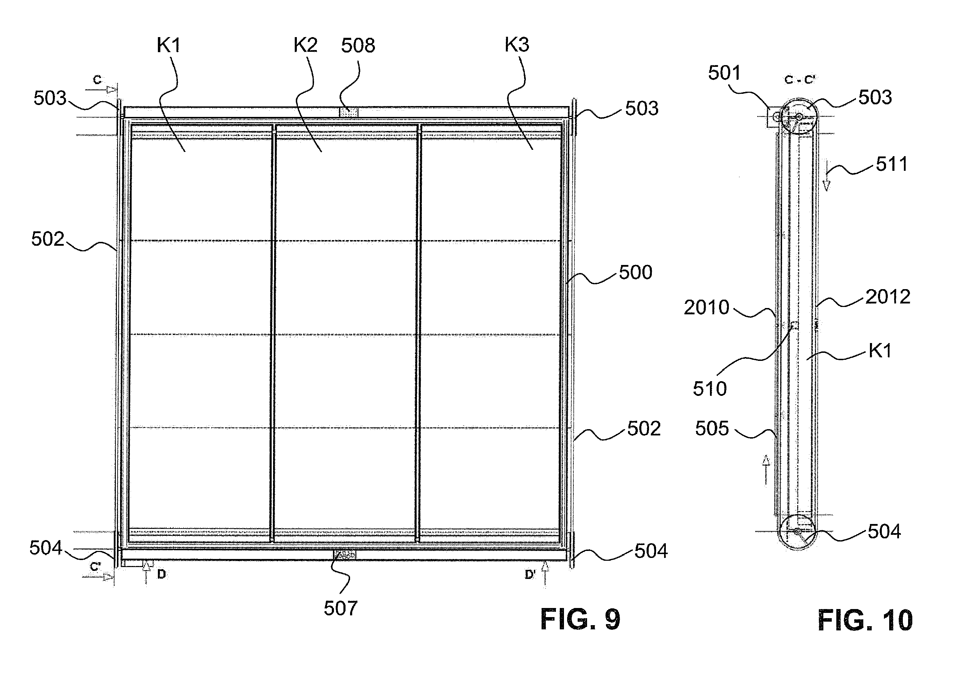

Der Latentspeicher ist eine gute Vorbeugungsmassnahme gegen Überhitzung der Anlage. Ferner kann überschüssige Energie in periphere Vorrichtungen, wie eine Heizung etc. abgegeben werden. Ferner kann eine Schutzvorrichtung vorgesehen sein, welche mit Hilfe der Fig. 9 bis 11 beschrieben wird.

Die koaxiale Anordnung des Absorberrohrs 102 und des Wärmespeicherelements 300 im zylindrischen Durchbruch 202 ermöglicht eine optimale Auslegung des Zwischenraumes 103 durch die flexible Auswahl verschiedener Durchmesser der koaxial angeordneten Rohre für die effizienteste Umsetzung der Solarenergie.

Falls das Wärmeträgermedium den Zwischenraum 103 in einer turbulenten Strömung durchströmt, kann der Wärmetausch zwischen Absorberrohr 102 und Wärmeträgerflüssigkeit in besonders effizienter Art und Weise erfolgen. Die turbulente Strömung kann beispielsweise durch die Anordnung der Zentriernocken 400 erzielt werden. Alternativ können auch Mischelemente vorgesehen werden.

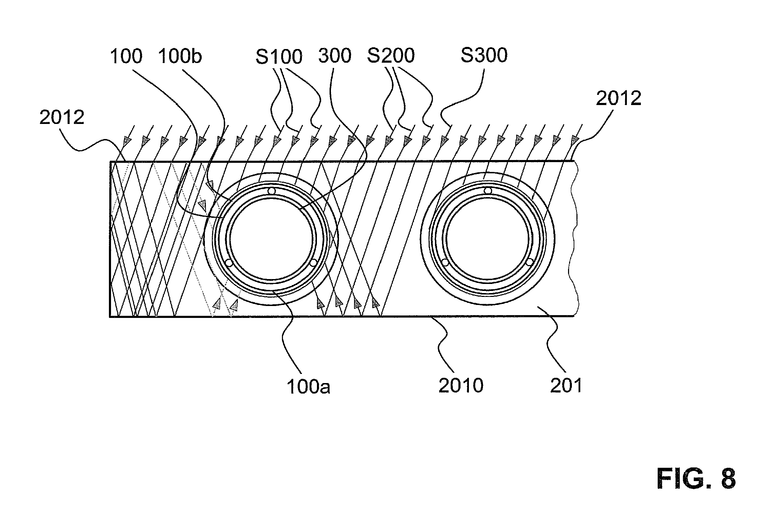

In Fig. 8 wird der Strahlengang von Sonnenlicht gezeigt, welches in den quaderförmigen Halterkörper 201 über die Oberseite 2012 einfällt. Die Oberseite 2012 kann auch als Eintrittsfläche bezeichnet werden. Über diese Eintrittsfläche 2012 können Strahlen S100, S200, S300 des Sonnenlichts in den Halterkörper 201 eintreten. Die Eintrittsfläche 2012 kann eben, konkav oder konvex sein. Eine ebene Eintrittsfläche 2012 ist besonders vorteilhaft, denn dies erlaubt eine besonders einfache Reinigung der Eintrittsfläche 2012.

Die Eintrittsfläche 2012 ist vorzugsweise mit einer Schicht beschichtet, welche in eine erste Richtung für Lichtstrahlen durchlässig ist, so dass also Sonnenlicht in den Halterkörper 201 eintreten kann.

Alternativ kann die Eintrittsfläche 2012 mit einer oben mit Hilfe des ersten Ausführungsbeispiels beschriebenen Nanobeschichtung versehen sein. Alle in dieser Beschreibung offenbarten Ausführungsbeispiele können beliebig entweder ganz oder auch nur teilweise miteinander verbunden bzw. kombiniert werden.

Es können auch sehr kleine kugelförmige Teilchen (Fluoreszenzkörper) in die Randzonen des Halterkörpers 201, welcher die Funktion eines Lichtleiterkörpers hat, in unmittelbarer Nähe der Spiegelschichtflächen eingebracht werden, damit eine "Rayleigh-Streuung/Reflektion" entsteht. Dieses Verfahren ermöglicht eine wirkungsvollere Bestrahlung der unteren Hälfte des Absorberrohrs 102.

Die Strahlen S100 bescheinen den oberen Teil 100b Absorberelementes 100.

Die Strahlen S200 treten durch die Eintrittsfläche 2012 in den Halterkörper 201 ein und werden an der Reflektorschicht, welche auf der unteren Seite 2010 angeordnet ist, reflektiert und bescheinen somit den unteren Teil 100a des Absorberelementes 100 indirekt.

Der Strahl S300 tritt durch die Eintrittsfläche 2012 in den Halterkörper 201 ein und wird an der Reflektorschicht, welche auf der unteren Seite 2010 angeordnet ist, reflektiert. Im weiteren Verlauf wird der Strahl S300 dann an der Innenseite an der Eintrittsfläche 2012 erneut reflektiert. Durch die erneute Reflektion an der Innenseite der Eintrittsfläche 2012 bescheint der Strahl S300 das Absorberelement 100 von oben.

Die Absorberelemente 100 werden hier nicht von einem bestimmten Sektor bestrahlt, wie dies bei einem Reflektor des Standes der Technik der Fall ist. Falls die Sonne flach steht, kann es sein, dass die Vakuumröhre indirekt über eine Eintrittsfläche 2012, welche nicht direkt im Bereich des entsprechenden Absorberelementes 100 liegt, von unten her bestrahlt wird. Somit kann bei tiefem Sonnenstand ein grösserer Anteil der Strahlen genutzt werden, als bei Kollektoranlagen des Standes der Technik. Der Wirkungsgrad wird daher erhöht.

Es ist klar, dass die in der Fig. 8 dargestellten Merkmale mit den Solarkollektoren und deren Gehäuse 30 oder 2 nach Fig. 1, 2 und 3 bis 7 kombinierbar sind, insbesondere kann durch Vorsehen eines Latentspeichers 301 mit Begrenzung des Fluidmediums auf den Ringspalt 103 dieses Medium nun wirksam von allen Seiten bestrahlt werden.

Zusammenfassend kann gesagt werden, dass mit einem erfindungsgemässen Kollektorelement folgende Vorteile erzielt werden:
- Aufgrund der Einbettung der Absorberelemente 100 in dem Halterkörper 201 kann eine Kollektoranlage angegeben werden, welche einen besonders hohen Wirkungsgrad aufweist, da die Wärmeverluste äusserst minimal sind.
- Solche Kollektorelemente sind in Form und Gestaltung sehr flexibel und erfüllen damit die architektonischen Forderungen, die mit bisherigen Kollektorbauarten nicht zufriedenstellend erfüllt werden konnten.
- Die erfindungsgemässen Kollektorelemente sind leichter, stabiler und handlicher als die meisten Flach- und Vakuumkollektoren und ermöglichen den Herstellern und den Installateuren eine wirtschaftlichere Fertigung, Lagerung und Installation. Ferner können beispielsweise der Halterkörper und die Profilelemente mittels eines Spritzgussverfahrens effizient und kostengünstig hergestellt werden.
- Die zu evakuierenden Hohlräume können einfach evakuiert werden und das Vakuum kann über einen langen Zeitraum aufrecht gehalten werden.
- Das selektiv beschichtete Absorberrohr ist als Standard-Metallrohmaterial preisgünstig, einfach und flexibel herstellbar. Ferner weist es eine gute Wärmeleitfähigkeit auf und ist zudem effizienter und mechanisch stabiler als die beschichteten empfindlichen Absorberglasrohre mit hohem Wärmeleitwiderstand.
- Das vakuumisolierte Absorberrohr wird vom Halterkörper zusätzlich wärmeisolierend geschützt (Wärmeleitfähigkeit von z.B. Plexiglas ist 0.18 W/(mK)).
- Das metallische Absorberrohr kann in verschiedenen Längen und Rohrdurchmessern hergestellt werden und kann damit die klimabedingten Anforderungen wärmetechnisch und wirtschaftlich effizient erfüllen, was die Absorber von Flach- und Vakuumröhrenkollektoren nicht im gleichen Masse ermöglichen können.
- Die metallischen Absorberrohre der Erfindungslösung ermöglichen einen effizienten Wärmeübergang der absorbierten Solarenergie in die Wärmeträgerflüssigkeit, sodass ohne ein zusätzliches verlustbehaftetes Wärmeleitelement die innere Oberfläche des Absorberrohres von der Wärmeträgerflüssigkeit turbulent gespült wird.
- Das konzentrisch im Absorberrohr befestigte Innenrohr mit Auswahlmöglichkeit von verschiedenen Rohrdurchmessern ermöglicht eine wärmetechnisch willkommene einsatzbezogene Optimierung der Massenströme der Wärmeträgerflüssigkeit.
- Das Wärmespeicherelement ermöglicht in diesem Kollektorsystem mit der latenten Wärmespeicherung direkt an der Wärmequelle eine effiziente Nutzung der sommerlichen Überschussenergie, die sonst bei herkömmlichen Kollektoren verloren geht. Ausserdem wird dadurch eine Überhitzung der Solaranlage weitgehend vermieden.
- Die Reflektoren von meisten Vakuumröhrenkollektoren sind konstruktionsbedingt aussen unter den Vakuumröhren montiert und sind stark den Wetter- und Umwelteinflüssen ausgesetzt. Die Erfindungslösung bietet nicht nur ein völlig geschütztes Reflektorsystem im Lichtleiterkörper, sondern ermöglicht auch eine effizientere Beleuchtung der Rückseitenflächen der Absorberrohre mit konstanter Qualität.
- Die wasserführenden Vor- und Rückleitungen und die Verbindungsleitungen sind in den Kollektoren integriert und müssen nicht zusätzlich isoliert werden. Wasserdichte Isolationen unten und an vier Seiten verhindern weitgehend die Wärmeverluste. Die Abdeckungen der vier Seitenisolationen verhindern die Zersetzung der Seitenisolationen durch UV- Strahlen und Umweltverschmutzung.
- Eine Vakuumprüfung und die Evakuierung der Kollektorelemente auf einem Dach sind leicht durchführbar.

Figs. 9 bis 11 zeigen eine Anordnung von mehreren Kollektorelementen K1, K2, K3 mit einer Abdeckungsvorrichtung 500. Die Kollektorelemente K sind vorzugsweise wie oben beschrieben ausgestaltet. Eine solche Abdeckungsvorrichtung 500 verhindert eine Beschädigung eines Kollektorelementes K oder einer Anordnung einer Mehrzahl von erfindungsgemässen Kollektorelementen K1-K3. Eine Beschädigung kann beispielsweise durch Wetterereignisse, wie Hagel, Sturm, Schnee etc., Überhitzung bei zu geringem Wärmeverbrauch eines mit dem Kollektorelementes verbundenem Wärmetauscher oder durch Stromausfall (drohen) oder verursacht werden.

Die Abdeckungsvorrichtung 500 umfasst eine Antriebsvorrichtung 501, einen Antriebsriemen 502, angetriebene Riemenscheiben 503, Umlenkscheiben 504 und eine Schutzblache 505, die man auch als Schutzplane bezeichnen kann. Vorzugsweise ist die Schutzblache 505 parallel zur Oberfläche der Kollektorelemente angeordnet und erstreckt sich über die gesamte Oberfläche der Kollektorelemente K1, K2, K3, falls die Oberfläche der Kollektorelemente durch die Schutzblache 505 abgedeckt werden soll. Vorzugsweise ist die Schutzblache 505 als umlaufende Schutzblache ausgestaltet, das heisst, die Schutzblache bewegt sich auf der Oberseite 2012 nach unten und auf der Unterseite 2010 wieder nach oben. Alternativ kann die Schutzblache 505 auch in zwei Richtungen angetrieben werden. Bei beiden Ausführungsbeispielen ist die Schutzblache 505 unter bzw. hinter den Kollektorelementen K1, K2 und K3, also auf der Unterseite 2010 angeordnet, wenn diese Wärme absorbieren sollen. Mit anderen Worten die Schutzplane 505 hat eine Länge in Ablaufrichtung, die dem Abstand der beiden Umlenk-/Riemenscheiben 503 und 504 entspricht, so dass sie entweder auf der Oberseite 2012 schützend vor dem Kollektor gespannt ist oder - beispielsweise auch zum Trocknen - hinter der Unterseite 2010 hinter dem Kollektor gespannt ist. Die Schutzplane 505 kann durch die seitlichen Führungen gespannt sein oder durch Einspannen eines quer verlaufenden Steges, mit dem die flexible Plane mitgezogen wird.

Die angetriebenen Riemenscheiben 503 sind oberhalb der Kollektorelementanordnung und die Umlenkscheiben 504 sind unterhalb der Kollektorelementanordnung angeordnet. Im vorliegenden Ausführungsbeispiel sind je zwei Riemenscheiben 503 und zwei Umlenkscheiben 504 angeordnet. Die beiden Riemenscheiben 503 bzw. die beiden Umlenkscheiben 504 können über gemeinsame Achsen verbunden sein. Der Antriebsriemen 502 wird durch die angetriebene Riemenscheibe 503 angetrieben und durch die Umlenkscheibe 504 umgelenkt.

Die Schutzblache 505 ist mit dem Antriebsriemen 502 verbunden und kann durch diesen angetrieben werden. Sobald die Antriebsvorrichtung 501 einen entsprechenden Steuerbefehl erhält, wird der Antriebsriemen 502 bzw. die Schutzblache 505 über die Antriebsriemenscheibe 503 angetrieben. Dadurch kann die Schutzblache 505 nach oben oder nach unten bewegt werden.

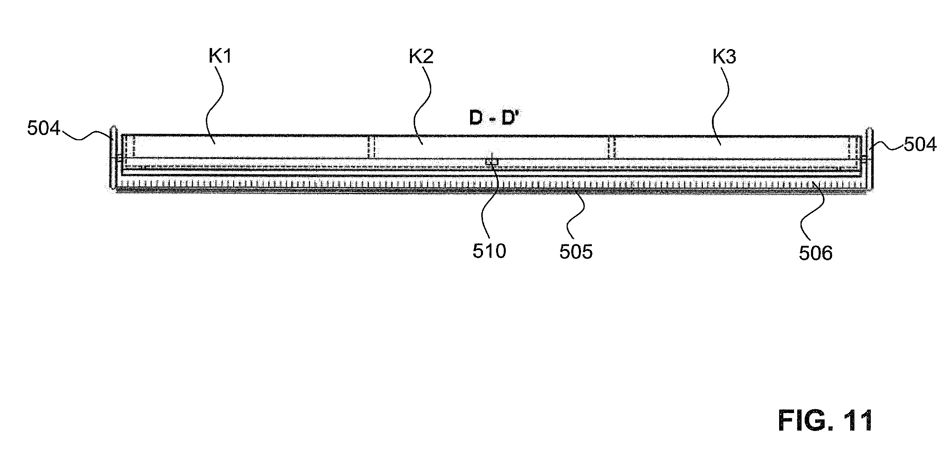

In einer weiteren, etwas modifizierten Ausführungsform, wie diese in Fig. 11 dargestellt ist, kann die Schutzblache 505 Reinigungsborsten 506 aufweisen. Diese Reinigungsborsten 506 gleiten bei einer Bewegung der Schutzblache 505 über die Oberfläche der einzelnen Kollektorelemente und reinigen somit die Oberflächen. Solche Reinigungsborsten 506 sind insbesondere bei der Entfernung von Staub, Schmutzpartikeln, Schnee etc. äusserst vorteilhaft. Um eine besonders gute Reinigung zu erzielen, ist es vorteilhaft, die Reinigungsborsten 506 mehrere Male über die Oberfläche der Kollektorelemente zu bewegen, also die Schutzplane 505 mit den zur Kollektorfläche hingewandten Reinigungsborsten 506 mehrfach vor den Kollektorelementen vorbeizufahren.

Ferner können diverse Sensoren angeordnet sein. Diese Sensoren erfassen Ist-Zustände von der Umgebung. Sobald ein Ist-Zustand einen vorbestimmten Soll-Zustand erreicht bzw. überschreitet, kann der Vorgang des Abdeckens bzw. des Aufdeckens der Kollektorelemente ausgelöst werden. Die entsprechenden Soll-Zustände können beispielsweise in einem Solar-Regler abgespeichert werden.

Ein Photosensor 509 misst die Helligkeit der Strahlung auf die Kollektorelemente.

Ein Hagelsensor 510 detektiert aufkommenden Hagelschlag. Die vom Sensor gemessenen Werte werden mit vorbestimmten Referenzwerten verglichen. Sobald die gemessenen Werte die vorbestimmten Referenzwerte erreichen oder überschreiten, wird die Antriebsvorrichtung 501 mit dem entsprechenden Befehl versorgt und die Schutzblache 505 wird über die Kollektorelemente K1 bis K3 gezogen. Sobald über einen vorbestimmten Zeitraum vom Sensor kein Hagelschlag erfasst wird, erhält das Antriebssystem den Befehl, die Schutzblache wieder zurückzuziehen, so dass die Kollektorelemente K1 bis K3 die Sonnenenergie wieder absorbieren können.

Ein weiterer Sensor kann beispielsweise ein Schneesensor sein. Beim leichten Schneetreiben im Tagesbetrieb registrieren zuerst die unterschiedlich gebauten Schneesensoren 507 und 508 durch die relative Verdunkelung ihrer Zellenoberflächen Messwerte, die mit den Messwerten vom Photosensor 509 zusammen mit gespeicherten und vorbestimmten Referenzwerten verglichen werden. In der Nacht werden die Reflexionen der eingebauten Leuchtdioden (LED) in den Schneesensoren ausgewertet. Wenn anschliessend die elektronische Auswertung im Solarregler den anfänglichen Schneefall feststellt, dann wischen die auf der Rückseite der Schutzblache befestigten Borsten 506 einmal die ganze Oberfläche der Kollektorelemente ab. Dabei wird die von der Oberfläche abgewischte Schneemenge auf einem der beiden Schneesensoren deponiert, der für die Auswertung massgebend ist. Die Messwerte werden zwischengespeichert.

Sofern nach mehreren Wiederholungen und Auswertungen der Messwerte Schneefall detektiert wird, kann die Schutzblache die Oberfläche der Kollektorelemente abdecken. Falls nur geringer Schneefall detektiert wird, können sich die Abwischvorgänge mehrmals wiederholen.

Nach Sonnenaufgang vergeht je nach Monat, Ausrichtung und Neigung der Kollektorelemente, eine gewisse Zeit, bis die Schneesensoren die Solarstrahlen registrieren und anschliessend das entsprechende Signal an die Antriebsvorrichtung 501 ausgeben, dass die Schutzblache 505 von der Oberfläche der Kollektorelemente entfernt werden kann. Die Schutzblache 505 bewegt sich dann intermittierend nach unten, um die darüberliegenden Schneemassen abgleiten zu lassen. Falls die Schutzblache 505 über nanobeschichtete Oberfläche verfügt, können die Schneemassen besonders gut abgleiten. Bei der Bewegung der Schutzblache 505 kann der Solarregler den Laststrom des Elektromotors messen. Der Laststrom kann als indirekter Indikator für die Schneelast oder für die Dicke der Schneeschicht angesehen werden. Der Elektromotor wird ruckartig beschleunigt und nach kurzer Zeit gestoppt und wird anschliessend wieder ruckartig beschleunigt, bis der Laststrom auf immer kleinere Werte sinkt und schliesslich der normale Lastrom ohne Schneelast vom Solarregler als indirekter Indikator der Schneebefreiung festgestellt wird. Dieser Bewegungsablauf ermöglicht ein besseres Abgleiten der Schneemassen von der Schutzblache 505 nach unten auf die Dachfläche ohne in diesem Bereich einen hinderlichen immer höher werdenden Haufen entstehen zu lassen, weil auch hier die gleitenden Schneemassen hintereinander abgestossen werden.

Bei einer Solaranlage mit mehreren Kollektorelement-Feldern auf dem Dach ist der Solarregler so programmiert, dass das oberste Kollektorelement zuerst und das unterste Kollektorelement als letztes angesteuert wird. Das heisst, das oberste Kollektorelement wird zuerst vom Schnee befreit.

Nachdem die Kollektorelemente vom Schnee befreit sind, wird die Schutzblache 505 mit Hilfe von Magnetsensoren und von Induktionsstreifen für Wegmessung, die zwischen der Innenseite des Antriebsriemenscheiben 503 und dem Motorflansch befestigt sind, wieder unter den Kollektorelementen in der ursprünglichen Lage positioniert.

Die Schutzvorrichtung verhindert zuverlässig eine oben beschriebene Beschädigung der Kollektorelemente und schützt die Kollektoren vor Hagelschäden, verhindert Schneedecken auf Kollektoren; ferner wird eine Selbstreinigung im Verschmutzungsfall ermöglicht.

Ferner kann die Schutzvorrichtung mit einer nicht gezeigten Pufferbatterie versehen sein, welche bei Stromausfall einen Notstrom-Betrieb gewährleistet.

Bei einem Stromausfall werden die Kollektorelemente beispielsweise nach 30 Sekunden zugedeckt, falls mittels dem Photosensor eine Mindesthelligkeit im Tagebetrieb gemessen wird.

Wenn die Pufferbatterie der Notstromversorgung einen kritischen Bereich der Unterspannung (z.B. 11,7 bzw. 23,4 V DC) erreicht, wird zuerst dieser Zustand mit einem Summer und einer Signallampe beispielsweise im Heizungsraum signalisiert. Je nach Einstellung an der Notstromversorgung wird der Feldmodul z.B. nach einer Stunde mit der Schutzblache zugedeckt. Die akustische und optische Warnsignale werden erst mit einer Quittierung ausgeschaltet.

Im Solarbetrieb vergleicht der Regler (Heizungsraum) ständig die Differenztemperatur Δt zwischen der Kollektortemperatur und der Speichertemperatur des Latentspeichers. Wenn sie in einem bestimmten Zeitabschnitt tendenziell gemessen zu schnell zunimmt und über den festgespeicherten Referenzwert liegt, wird der Feldmodul mit der Schutzblache zugedeckt, bis die weiter gemessenen Δt-Werte wieder im normalen Bereich liegen.

Die Führungen können durch die Riemenscheiben und Umlenkscheiben 503/504 gebildet werden, da, wenn diese direkt angetrieben werden und die Plane 505 über diese verspannt ist, dieser direkte Antrieb über die Länge des Solarelementes möglich ist, wenn der Kreis durch entsprechende ausserhalb der Solarkollektoren laufende Bänder geschlossen ist. Es ist auch möglich, seitliche Führungen vorzusehen, die dann entsprechend den Antriebsriemen 502 integrieren, an dem die Plane seitlich befestigt oder zumindest geführt wird. Es kann dabei sein, dass an einer oder mehrere dezidierten Stellen dieser Riemen diese an gegenüberliegenden Stellen über quer verlaufende Antriebstraversen verfügen, die an diesen befestigt sind, an denen entsprechende Abschnitte der Plane 505 fest verbunden sind. Wesentlich ist, dass einerseits eine spannbare reissfeste Plane als Abdeckung und Schutz vor die Solarkollektoren verfahren werden kann und andererseits diese Plane hinter den Solarkollektoren verstaubar ist. Als Planenmaterial können Materialien verwendet werden, wie sie bei Lastkraftwagenplanen oder Zelten Verwendung finden.

### Bezugszeichenliste

- 1: Vakuumröhre
- 2: Halter
- 3: Reflektor mit reflektierender Schicht
- 10: Absorberschicht
- 11: Innenrohr
- 12: Aussenrohr
- 13: Zwischenraum mit Absorberschicht
- 20: Rille oder Nute
- 21: Oberseite
- 22: Unterseite
- 24: Seitenwand
- 25: Eintrittsfläche
- 30: Gehäuse
- 31: Röhrenteil des Gehäuses
- 32: Bodenteil des Gehäuses
- D: Durchmesser der Vakuumröhre
- A: Abstand zwischen zwei Vakuumröhren
- T: Tiefe der Rille oder Nute
- K: Kollektorelement
- 100: Absorberelement
- 200: Halter
- 300: Wärmespeicherelement
- 400: Zentriernocken
- 500: Abdeckungsvorrichtung
- 101: Absorberschicht
- 102: Absorberrohr
- 103: Zwischenraum
- 201: Halterkörper
- 202: zylindrischer Durchbruch
- 203: erstes inneres Profilelement
- 204: zweites inneres Profilelement
- 205: erstes äusseres Profilelement
- 206: zweites äusseres Profilelement
- 207: Nute (Vakuum- oder Evakuierungsnute)
- 208: Ringspalt
- 209: zu evakuierenden Hohlraum
- 210: Evakuierungsanschluss
- 211: Anschlusselement
- 301: Hohlraum
- 302: Hohlkörperdeckel
- 303: Hohlkörperseitenwand
- 401: Fliessrichtung kaltes Wärmeträgermedium
- 402: Fliessrichtung warmes Wärmeträgermedium
- 501: Antriebsvorrichtung
- 502: Antriebsriemen
- 503: Riemenscheiben
- 504: Umlenkscheiben
- 505: Schutzblache
- 506: Borsten
- 507: Schneesensor
- 508: Schneesensor
- 509: Photosensor
- 510: Hagelsensor
- 511: Bewegung der Schutzblache
- 2010: Unterseite
- 2011: Seitenflächen
- 2012: Oberseite
- 2013: untere Stirnseite
- 2014: obere Stirnseite
- 2020: zylindrische Mantelfläche
- 2030: ringförmige Nute
- 2031: durchgehende Öffnung
- 2040: ringförmige Nute
- 2041: durchgehende Öffnung
- 2050: Kanal (Kaltwasser)
- 2060: Kanal (Warmwasser)

## Patentansprüche

1. Kollektorelement umfassend ein Absorberelement (1; 100), insbesondere eine Solarkollektorröhre, insbesondere Vakuumröhre, welches ein Absorberrohr (11, 102) aus einem gut wärmeleitenden Material, beispielsweise einem Metall, beispielsweise Aluminium oder Kupfer, und eine Absorberschicht (101) umfasst, wobei die Absorberschicht (101) das Absorberrohr (102) in wesentlichen Teilen, vorteilhafterweise vollständig umgibt, wobei ein dieses Absorberrohr (11, 100) umgebendes und abschliessendes Gehäuseelement (12; 30; 2020) vorgesehen ist, so dass zwischen Absorberrohr (11, 100; 208) und Gehäuseelement (12; 30) ein Vakuum, beispielsweise mit einem Druck von weniger als 10 Pascal, insbesondere weniger als 0.1 Pascal ausbildbar ist, wobei der Raum innerhalb der Innenwand des Absorberrohres (102) mit einem Wärmeträgermedium durchströmbar ist.

2. Kollektorelement nach Anspruch 1, **dadurch gekennzeichnet, dass** das Kollektorelement weiterhin ein Wärmespeicherelement (300) umfasst, wobei das Wärmespeicherelement (300) im Absorberrohr (102) angeordnet ist, so dass zwischen einer Innenwand des Absorberrohres (102) und dem Wärmespeicherelement (300) ein Zwischenraum (103) vorhanden ist, in dem das besagte Wärmeträgermedium durchströmbar ist.

3. Kollektorelement nach Anspruch 1, **dadurch gekennzeichnet, dass** das rohrförmige Wärmespeicherelement (300) ein vollständig abgeschlossenes Volumen (301) innerhalb des Absorberrohrs (102) ausbildet, und/oder dass der Hohlraum (301) des Wärmespeicherelementes (300) mit Luft, einem Gas und/oder einem Latentspeichermaterial wie einem Phasenwechselmaterial gefüllt ist.

4. Kollektorelement nach einem der vorhergehenden Ansprüche, **dadurch gekennzeichnet, dass** das Gehäuseelement (2; 12, 30) mindestens an seiner oberseitigen Eintrittsfläche (25) aus einem durchsichtigen oder durchscheinenden Material, insbesondere aus der Gruppe von Glas oder Plexiglas oder anderen lichtdurchlässigen Kunststoffen, gefertigt ist, und/oder dass auf der unterseitigen Grenzfläche (22) und/oder an den Seitenwänden (24) des Gehäuseelementes ein Reflektor (3) vorgesehen ist, der auch eingelassen oder eingegossen sein kann.

5. Kollektorelement nach einem der vorstehenden Ansprüche, umfassend mindestens zwei Absorberelemente (1) und einen Halter (2) zur Aufnahme eines Absorberelementes (1) mit einer Oberseite (21) und einer Unterseite (22), wobei die Absorberelemente (1) jeweils seitlich beabstandet zueinander im Halter (2) angeordnet sind, und der Halter (2) eine der Anzahl Absorberelemente (1) gleiche Anzahl Rillen (20) mit einer zu den Solarkollektorröhren (1) komplementären Querschnittsform aufweist, welche in die Oberseite (21) eingelassen sind und in welche die Absorberelemente (1) einlegbar sind, wobei die Länge der Rillen (20) im wesentlichen der wirksamen Länge der Absorberelemente (1) entspricht.

6. Kollektorelement nach einem der vorstehenden Ansprüche 1 bis 4, umfassend mindestens zwei Absorberelemente (100), insbesondere Solarkollektorröhren, insbesondere Vakuumröhren, und einen Halter (200) zur Aufnahme eines Absorberelementes (100) mit einer Oberseite (2012) und einer Unterseite (2010), wobei die Absorberelemente (100) jeweils seitlich beabstandet zueinander im Halter (200) angeordnet sind, **dadurch gekennzeichnet, dass** der Halter (200) mindestens zwei parallele zylindrische Durchbrüche (202) aufweist, welche zur Aufnahme der Absorberelemente dienen und wobei zwischen dem Absorberelement (100) und der den jeweiligen zylindrischen Durchbruch (202) begrenzenden Mantelfläche (2020) ein Zwischenraum, insbesondere ein Ringspalt (208), vorhanden ist, welcher evakuierbar ist.

7. Schutzabdeckung für ein oder mehrere Kollektorelemente (K) zur Wärmegewinnung aus Sonnenstrahlung, mit einem Antrieb, wobei der Antrieb mechanisch mit der Schutzabdeckung (505) verbunden ist, so dass das (K) oder die (K1, K2, K3) Kollektorelemente durch die Schutzabdeckung (505) abdeckbar sind, **dadurch gekennzeichnet, dass** die Schutzabdeckung (505) eine flexible Schutzblache oder Schutzplane (505) ist, die im wesentlichen der Grösse der abzudeckenden Kollektorelemente (K) entspricht, dass Führungen vorgesehen sind, mit denen die Schutzplane (505) über die Länge der Kollektorelemente (K) oberhalb der Kollektorelemente (K) aufziehbar (2010) ist, und dass Führungen vorgesehen sind, mit denen die Schutzplane (505) über die Länge der Kollektorelemente (K) unterhalb der Kollektorelemente (K) abdeckbar anordbar (2012) sind.

8. Schutzabdeckung nach Anspruch 7, **dadurch gekennzeichnet, dass** der Antrieb der Schutzplane (505) eine Antriebsvorrichtung (501) ist, die mit mindestens einem Sensor versehen ist, mit welchem Umgebungsdaten oder Witterungsdaten oder Betriebsdaten als Steuerdaten für den Antrieb der Schutzplane (505) erhalten werden können.

9. Schutzabdeckung nach Anspruch 7 oder 8, **dadurch gekennzeichnet, dass** die Schutzplane (505) auf der dem Kollektorelement zugewandten Seite Borsten (506) umfasst, wobei die Borsten (506) derart angeordnet sind, dass diese die Oberfläche des Kollektorelementes berühren, sofern die Schutzblache (505) über die besagte Oberfläche bewegt wird.

10. Schutzabdeckung nach Anspruch 9, **dadurch gekennzeichnet, dass** die Borsten (506) nur an einer in Bewegungsrichtung der Plane (505) endseitigen Kante angeordnet sind.

11. Schutzabdeckung nach Anspruch 9, **dadurch gekennzeichnet, dass** Borsten (506) als flexible Abstandshalter über im wesentlichen die gesamte Schutzplane (505) auf der dem Kollektorelement zugewandten Seite angeordnet sind.
